# EUROPÄISCHE PATENTSCHRIFT

(11) **EP 2 912 078 B1**
(45) Veröffentlichungstag und Bekanntmachung des Hinweises auf die Patenterteilung: **23.11.2016**
(21) Anmeldenummer: 13780353.2
(22) Anmeldetag: 23.10.2013
(51) Int. Cl.: C08F 222/10, C08F 222/14, F16B 13/14

(54) **HARZMISCHUNG AUF VINYLESTERHARZ-BASIS, DIESE ENTHALTENDEN REAKTIONSHARZMÖRTEL SOWIE DESSEN VERWENDUNG**
RESIN MIXTURE BASED ON VINYL ESTER RESIN, REACTIVE RESIN MORTAR COMPRISING SAME AND USE THEREOF
MÉLANGE DE RÉSINES À BASE DE RÉSINE VINYLESTER, MORTIER DE RÉSINE COMPOSITE LE CONTENANT, AINSI QUE SON UTILISATION

(30) Priorität: 26.10.2012 DE 102012219652
(43) Veröffentlichungstag der Anmeldung: 02.09.2015
(73) Patentinhaber: Hilti Aktiengesellschaft, 9494 Schaan (LI)
(72) Erfinder: LEITNER, Michael, 86899 Landsberg (DE); JAEHNICHEN, Klaus, 01187 Dresden (DE); HEINZE, Marcus, 01219 Dresden (DE); VOIT, Brigitte, 01187 Dresden (DE); POSPIECH, Doris, 01309 Dresden (DE)
(86) Internationale Anmeldenummer: PCT/EP2013/072105
(87) Internationale Veröffentlichungsnummer: WO 2014/064125

(56) Entgegenhaltungen:
- EP-A1- 0 713 015
- WO-A1-2010/108939
- US-A- 3 336 361

## Beschreibung

Die vorliegende Verbindung betrifft eine Harzmischung umfassend ein Vinylesterharz und eine co-polymerisierbare Verbindung, die mindestens zwei Methacrylat-Gruppen trägt, als Vernetzungsmittel.

Die Verwendung von Reaktionsharzmörteln auf Basis radikalisch härtbarer Verbindungen als Bindemittel ist seit langem bekannt. Im Bereich der Befestigungstechnik hat sich die Verwendung von Harzmischungen als organisches Bindemittel für die chemische Befestigungstechnik, z.B. als Dübelmasse, durchgesetzt. Es handelt sich dabei um Verbundmassen, die als Mehrkomponenten-Systeme konfektioniert sind, wobei eine Komponente die Harzmischung und die andere Komponente das Härtungsmittel enthält. Andere, übliche Bestandteile, wie beispielsweise Lösungsmittel einschließlich Reaktivlösungsmittel (Reaktivverdünner), können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet. Als radikalisch härtbare Verbindungen werden häufig, insbesondere für die chemische Befestigungstechnik, Vinylesterharze und ungesättigte Polyesterharze eingesetzt.

Als Basisharze werden aufgrund ihrer vorteilhaften Eigenschaften Vinylesterharze und insbesondere Vinylesterurethanharze eingesetzt, die durch monomere oder polymere aromatische Diisocyanate und Hydroxy-substituierte Methacrylate, wie Hydroxyalkylmethacrylat erhältlich sind. Die EP 0713015 B1 beispielsweise beschreibt Dübelmassen mit ungesättigten Polyesterharzen, Vinylesterharzen einschließlich Vinylesterurethanharzen als Basisharze. Die Verbindungen derartiger Systeme basieren auf der klassischen Erdölchemie, bei der die Rohstoffe aus fossilen Rohstoffquellen, wie Erdöl, erhalten werden.

Es ist allgemein bekannt, dass die fossilen Rohstoffquellen, wie Erdöl, nicht unerschöpflich sind und irgendwann versiegen werden. Für den Fall, dass die Verfügbarkeit der fossilen Rohstoffquellen abnimmt, besteht die Gefahr, dass die Verbindungen, die für die hohen Anforderungen, die an die chemischen Befestigungssysteme gestellt werden, unerlässlich sind, unter Umständen nicht mehr erhältlich sind.

Daher besteht zukünftig Bedarf an alternativen Systemen auf Basis nachwachsender Rohstoffe mit einem hohen Anteil an Kohlenstoff aus nachwachsenden Rohstoffen, um auch in Zukunft weiterhin hoch spezialisierte chemische Befestigungssysteme bereitstellen zu können.

Harzzusammensetzungen auf Vinylester-Basis, welche Methacrylat-Derivate und Itaconsäureester als Reaktivverdünner enthalten sind bekannt. Die WO 2010/108939 A1 beschreibt eine Harzmischung auf Vinylester-Basis mit reduzierter Viskosität, die dadurch erreicht werden kann, dass der Reaktivverdünner teilweise durch einen Itaconsäureester ersetzt wird. Nachteilig an der beschriebenen Harzmischung ist, dass die Reaktivität der Harzmischung und deren Durchhärtung nicht immer gewährleistet ist.

Es besteht somit Bedarf an einer Harzmischung, die zum Teil aus Bestandteilen besteht, die auf Basis nachwachsender Rohstoffe erhältlich sind und mit denen die Lagerstabilität und Reaktivität der Harzmischung und daraus hergestellter Reaktionsharzmörtel entsprechend der jeweiligen Verwendung gesteuert werden kann.

Dies kann durch eine Harzmischung nach Anspruch 1 und einen Reaktionsharzmörtel nach Anspruch 9 gelöst werden. Bevorzugte Ausführungsformen sind den Unteransprüchen zu entnehmen.

Ein Gegenstand der Erfindung ist eine Harzmischung mit einem Vinylesterharz und einer co-polymerisierbaren monomeren Verbindung, die mindestens zwei Methacrylat-Gruppen trägt, als Vernetzungsmittel, wobei die co-polymerisierbare Verbindung teilweise oder auch ganz durch einen Itaconsäureester ersetzt wird.

Im Sinne der Erfindung sind Vinylesterharze Monomere, Oligomere, Präpolymere oder Polymere mit mindestens einer (Meth)acrylat-Endgruppe, so genannte (Meth)acrylatfunktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Monomeren, -Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Monomers, -Oligomers oder -Polymers mit Methacrylsäure oder Methacrylamid, bevorzugt mit Methacrylsäure, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglycolmono(meth)acrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht *M̅ₙ* im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Die Grundharze werden in einer Menge von 20 bis 100 Gew.-%, vorzugsweise 50 bis 70 Gew.-%, bezogen auf die Harzmischung, eingesetzt.

Erfindungsgemäß enthält die Harzmischung als Vernetzungsmittel mindestens eine co-polymerisierbare Verbindung mit mindestens zwei (Meth)acrylat-Gruppen, wobei dieses bzw. diese in einer Menge von 0 bis 80 Gew.-%, vorzugsweise 30 bis 50 Gew.-%, bezogen auf die Harzmischung, zugegeben werden.

Die co-polymerisierbare Verbindung, die mindestens zwei Methacrylat-Gruppen trägt, weist bevorzugt ein Zahlenmittel der Molmasse *M̅ₙ* im Bereich von 200 bis 500 g/mol auf.

Geeignete co-polymerisierbare Verbindungen sind aus der Gruppe bestehend aus 1,4-Butandioldi(meth)acrylat, 1,3-Butandioldi(meth)acrylat, 2,3-Butandioldi(meth)acrylate, 1,6-Hexandioldi(meth)acrylate und dessen Isomere, Neopentylglykoldi(meth)acrylat, Diethylenglykoldi(meth)acrylate, Triethylenglykoldi(meth)acrylate, Glycerindi(meth)acrylate, PEG-di(meth)acrylate, wie PEG200di(meth)acrylat, Triethylenglykoldi(meth)acrylat und Tripropylenglykoldi(meth)acrylat, Trimethylolpropandi(meth)acrylat, Dipropylenglykoldi(meth)acrylat, Tripropylenglykoldi(meth)acrylat, PPG-di(meth)acrylate, wie PPG250-di(meth)acrylat, 1,10-Decandioldi(meth)acrylat und/oder Tetraethylenglykoldi(meth)acrylat ausgewählt.

Bevorzugt ist die co-polymerisierbare Verbindung mit mindestens zwei (Meth)acrylatgruppen aus der Gruppen bestehend aus 1,4-Butandioldi(meth)acrylat, Neopentylglykoldi(meth)acrylat, PEG200-di(meth)acrylat, Triethylenglycoldi(meth)acrylat und/oder Tripropylenglykoldi(meth)acrylate ausgewählt.

Erfindungsgemäß wird die co-polymerisierbare Verbindung mit mindestens zwei (Meth)acrylatgruppen durch einen oder mehrere der unten beschriebenen Itaconsäureester ersetzt, wobei bis zu 100 Gew.-% von der co-polymerisierbaren Verbindung ersetzt werden kann.

Die Itaconsäure und deren Esterderivate wurden als wertvolle Chemikalien erkannt, die aus Biomasse erhältlich sind. Daher eignen sich diese Verbindungen grundsätzlich als Ausgangsverbindung auf Basis nachwachsender Rohstoffe.

Die Erfinder konnten zeigen, dass auf dieser Basis Bestandteile für Bindemittel bereitgestellt werden können, die keinen negativen Effekt auf die Eigenschaften des Bindemittels haben, weder in Bezug auf die Aushärteeigenschaften noch in Bezug auf die Eigenschaften der ausgehärteten Massen. Dies, obwohl bekannt ist, dass die Itaconsäure und deren Ester im Allgemeinen langsamer polymerisieren als Methacrylsäureester unter gleichen Bedingungen. Vielmehr konnte gezeigt werden, dass sich mit Verbindungen auf Basis von Itaconsäure Eigenschaften von Bindemitteln auf Vinylesterharz-Basis gezielt beeinflussen lassen.

Erfindungsgemäß ist der Itaconsäureester eine Verbindung der allgemeinen Formel (I) oder (II) 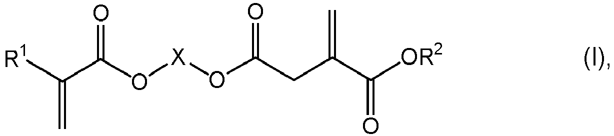 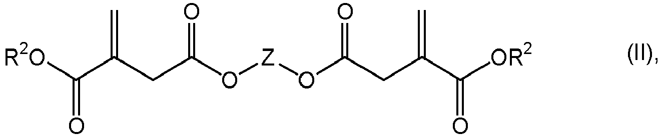 worin R¹ für Wasserstoffatom oder eine Methylgruppe steht, R² für Wasserstoff oder eine C₁-C₆-Alkylgruppe steht, X und Z unabhängig voneinander für eine C₂-C₁₀-Alkylengruppe stehen, ersetzt wird.

Die Verbindungen der Formel (I) können beispielsweise durch Umsetzen von Itaconsäureanhydrid mit Hydroxy-substituierten (Meth)acrylaten erhalten werden, wobei Verbindungen mit einer endständigen Carboxylgruppe und zwei radikalisch polymerisierbaren Kohlenstoffdoppelbindungen erhalten werden.

Die Hydroxy-substituierten (Meth)acrylate können aus nachwachsenden Rohstoffen erhalten werden und sind daher bei der Formulierung von Harzmischungen, die möglichst weitgehend auf Bestandteilen auf der Basis von nachwachsenden Rohstoffen beruhen, von besonderem Interesse. Es handelt sich dabei um aliphatische C₂-C₁₀-Hydroxyalkyl(meth)acrylate, wie Hydroxypropyl(meth)acrylat oder Hydroxyethyl(meth)acrylat, wovon die Methacrylat-Verbindungen besonders bevorzugt sind.

Der zur Synthese beispielsweise des bevorzugten Hydroxypropylmethacrylats erforderliche Propylenglykol kann aus Glycerin erhalten werden (CEPmagazine.org, www.aiche.org/cep (August 2007), in dem Artikel "A Renewable Route to Propylene Glycol" von Suzanne Shelley). Glycerin ist ein wesentliches Nebenprodukt der Herstellung von Biodiesel. Damit ist es für die Herstellung von Porpylenglykol eine billige, nachhaltige und umweltfreundliche Alternative zu dem herkömmlichen Rohstoff, der aus Erdöl erhältlich ist.

Der zur Synthese beispielsweise des Hydroxyethylmethacrylats erforderliche Ethylenglykol kann ebenfalls aus Rohstoffen, wie Ethylenoxid und Derivate davon, etwa Glykole, die aus Biomasse, etwa Molasse oder Zuckerrohr, erhältlich sind, gewonnen werden.

Die C₂- und C₃-Hydroxyalkylmethacrylate sind am Markt verfügbar.

Die Erfinder haben herausgefunden, dass nur dann lagerstabile Harzmischungen mit Itaconsäureestern der Formel (I) erhalten werden, wenn die endständige Carboxylgruppe des Itaconsäureesters mit den entsprechenden Alkoholen verestert wird.

Daher ist R² in Formel (I) bevorzugt eine C₁-C₆-Alkylgruppe und stärker bevorzugt eine Methyl- oder Ethylgruppe, wobei die Methylgruppe am stärksten bevorzugt ist. Diese Verbindungen sind ebenfalls aus nachwachsenden Rohstoffen erhältlich, wobei beispielsweise Methanol und Ethanol aus Biomasse erhältlich sind.

Die Verbindungen der Formel (II) können durch Umsetzen der etwa zweifachen Menge Itaconsäureanhydrid mit Diolen erhalten werden, wobei Verbindungen mit zwei endständigen Carboxylgruppen und zwei radikalisch polymerisierbaren Kohlenstoffdoppelbindungen erhalten werden.

Die Diole können aus nachwachsenden Rohstoffen erhalten werden und sind daher bei der Formulierung von Harzmischungen, die möglichst weitgehend auf Bestandteilen auf der Basis von nachwachsenden Rohstoffen beruhen, von besonderem Interesse. Dementsprechend handelt sich erfindungsgemäß dabei um aliphatische C₂-C₁₀-Alkandiole, wie, Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl-1,3-propandiol (Neopentylglykol).

Die Verwendung der C₂-C₁₀-Alkandiole hat den Vorteil, dass sie aus C-2- bis C-10-Grundbausteinen pflanzlichen Ursprungs erhältlich ist. Der bevorzugte 1,3 Propandiol beispielsweise kann biotechnologisch aus Glycerin gewonnen werden. Glycerin fällt als Bestandteil aller Pflanzenöle z.B. als Nebenprodukt bei der Fettsäureherstellung und bei der Herstellung von Biodiesel an.

Auch hier wurde beobachtet, dass nur dann lagerstabile Harzmischungen mit Itaconsäureestern der Formel (II) erhalten werden, wenn die endständigen Carboxylgruppen des Di-Itaconsäureesters mit den entsprechenden Alkoholen verestert werden.

Daher ist R² auch in Formel (II) bevorzugt eine C₁-C₆-Alkylgruppe und stärker bevorzugt eine Methyl- oder Ethylgruppe, wobei die Methylgruppe am stärksten bevorzugt ist. Diese Verbindungen sind ebenfalls aus nachwachsenden Rohstoffen erhältlich, wobei beispielsweise Methanol und Ethanol aus Biomasse erhältlich sind.

Damit sind die Itaconsäureester der allgemeinen Formel (I) und (II) vollständig aus nachwachsenden Rohstoffen erhältlich.

Am stärksten bevorzugt sind Itaconsäureester der allgemeinen Formel (I), worin R¹ und R² eine Methylgruppe bedeuten. Mit diesen Itaconsäureestern lassen sich Harzmischungen herstellen, die sowohl lagerstabil sind als auch eine höhere Reaktivität, verglichen mit den Itaconsäureestern, welche nur Itaconsäure-Doppelbindungen besitzen, und verglichen mit Verbindungen mit endständigen Carboxylgruppen eine schnellere Aushärtung aufweisen.

Neben den co-polymerisierbaren Verbindungen mit mindestens zwei (Meth)acrylatgruppen als Vemetzungsmittel kann die Harzmischung noch weitere niedrigviskose co-polymerisierbare Verbindungen mit einer (Meth)acrylatgruppe als Reaktivverdünner enthalten. Geeignete Reaktivverdünner sind in der EP 1 935 860 A1 und der DE 195 31 649 A1 beschrieben.

Grundsätzlich können auch andere übliche Reaktivverdünner, allein oder im Gemisch mit (Meth)acrylsäureestern, eingesetzt werden, z. B. Styrol, α-Methylstyrol, alkylierte Styrole, wie *tert*-Butylstyrol, Divinylbenzol, Vinylether und/oder Allylverbindungen.

Gemäß einer weiter bevorzugten Ausführungsform der Erfindung liegt die Harzmischung in vorbeschleunigter Form vor, das heißt sie enthält mindestens einen Beschleuniger für das Härtungsmittel. Bevorzugte Beschleuniger für das Härtungsmittel sind aromatische Amine und/oder Salze von Kobalt, Mangan, Zinn, Vanadium oder Cer. Besonders vorteilhaft haben sich als Beschleuniger Aniline, p- und m-Toluidine und Xylidine, die symmetrisch oder asymmetrisch mit Alkyl- oder Hydroxyalkylresten substituiert sind erwiesen. Beispielhaft können die folgenden bevorzugten Beschleuniger erwähnt werden: N,N-Dimethylanilin, N,N-Diethylanilin, N,N-Diethylolanilin, N-Ethyl-N-ethylolanilin, N,N-Diisopropanol-p-toluidin, N,N-Diisopropyliden-*p*-toluidin, N,N-Dimethyl-p-toluidin, N,N-Diethylol-p-toluidin, N,N-Diethylol-m-toluidin, N,N-Diisopropylol-m-toluidin, N,N-Bis(2-hydroxyethyl)toluidin, N,N-Bis(2-hydroxyethyl)xylidin, N-Methyl-N-hydroxyethyl-*p*-toluidin, Cobaltoctoat, Cobaltnaphthenat, Vanadium(IV)-acetylacetonat und Vanadium(V)-acetylacetonat.

Der Beschleuniger bzw. die Beschleunigermischung wird erfindungsgemäß in einer Menge von 0,05 bis 5 Gew.-%, vorzugsweise 1 bis 2 Gew.-%, bezogen auf die Harzmischung, eingesetzt.

In einer weiteren Ausführungsform der Erfindung enthält die Harzmischung ferner mindestens noch einen Polymerisationsinhibitor zur Sicherstellung der Lagerstabilität und zur Einstellung der Gelzeit. Als Polymerisationsinhibitoren sind erfindungsgemäß die für radikalisch polymerisierbare Verbindungen üblicherweise verwendeten Polymerisationsinhibitoren geeignet, wie sie dem Fachmann bekannt sind. Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Inhibitoren, die oft Bestandteil von kommerziellen radikalisch härtenden Reaktionsharzen sind, kommen Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, in Frage.

Diese haben, bezogen auf die Reaktionsharzformulierung, vorzugsweise einen Anteil von bis zu 1 Gew.-%, insbesondere zwischen 0,0001 und 0,5 Gew.-%, z.B. zwischen 0,01 und 0,1 Gew.-%.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und N-Oxylradikale in Betracht.

Als N-Oxylradikale können beispielsweise solche verwendet werden, wie sie in der DE199 56 509 beschrieben sind. Geeignete stabile N-Oxylradikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Die Polymerisationsinhibitoren können, abhängig von den gewünschten Eigenschaften der Harzzusammensetzungen, entweder alleine oder als Kombination von zweien oder mehreren davon verwendet werden. Die Kombination der phenolischen und der nichtphenolischen Polymerisationsinhibitoren ermöglicht dabei einen synergistischen Effekt, wie auch die Einstellung einer im Wesentlichen driftfreien Einstellung der Gelierzeit der Reaktionsharzformulierung zeigt.

Der Gewichtsanteil der nicht-phenolischen Polymerisationsinhibitoren liegt vorzugsweise im Bereich von 1 ppm bis 2 Gew.-%, vorzugsweise im Bereich von 10 ppm bis 1 Gew.-%, bezogen auf die Reaktionsharzformulierung.

Die erfindungsgemässen Harzmischungen werden zur Herstellung von Reaktionsharzmörteln für die chemische Befestigungstechnik eingesetzt.

Ein weiterer Gegenstand der Erfindung ist daher ein Reaktionsharzmörtel, der zusätzlich zu der Harzmischung übliche anorganische Zuschlagstoffe, wie Füllstoffe, Verdickungsmittel, Thixotropiermittel, nicht reaktive Lösungsmittel, Mittel zur Verbesserung der Fließfähigkeit und/oder Netzmittel, enthält. Die Füllstoffe sind vorzugsweise aus der Gruppe ausgewählt, bestehend aus Teilchen aus Quarz, Quarzgut, Korund, Calciumcarbonat, Calciumsulfat, Glas und/oder organischen Polymeren unterschiedlichster Größe und Form, beispielsweise als Sand oder Mehl, in Form von Kugeln oder Hohlkugeln, aber auch in Form von Fasern aus organischen Polymeren, wie beispielsweise Polymethylmethacrylat, Polyester, Polyamid oder auch in Form von Mikrokugeln aus Polymeren (Perlpolymerisaten). Bevorzugt und deutlicher verstärkend wirken sich die globulären, inerten Stoffe (Kugelform) aus.

Die anorganischen Zuschlagstoffe können in einer Menge von 30-80% in dem Reaktionsharzmörtel enthalten sein.

Als Verdickungsmittel oder Thixotropiermittel sind solche auf der Grundlage von Silikaten, Bentonit, Laponit, pyrogener Kieselsäure, Polyacrylaten und/oder Polyurethanen bevorzugt.

Ein weiterer Gegenstand der Erfindung ist ein Mehrkomponenten-Mörtelsystem, das mindestens zwei (räumlich) getrennte Komponenten A und B umfasst. Das Mehrkomponenten-Mörtelsystem umfasst zwei oder mehr separate, miteinander verbundene und/oder ineinander verschachtelte Behältnisse, wobei das eine die Komponente A, den Reaktionsharzmörtel, und das andere die Komponente B, den Härter, der gegebenenfalls mit anorganischen und/oder organischen Zuschlagstoffen gefüllt sein kann, beinhaltet.

Das Mehrkomponenten-Mörtelsystem kann in Form einer Patrone, einer Kartusche oder eines Folienbeutels, vorliegen. Bei der bestimmungsgemäßen Verwendung der erfindungsgemässen Reaktionsharzmörtel werden die Komponente A und die Komponente B entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen in das mit dem aushärtenden Reaktionsharz beschickte Bohrloch eingebracht und entsprechend justiert werden.

Bevorzugte Härter sind lagerstabile organische Peroxide. Besonders gut geeignet sind Dibenzoylperoxid und Methylethylketonperoxid, ferner *tert*-Butylperbenzoat, Cyclohexanonperoxid, Lauroylperoxid und Cumolhydroperoxid, sowie *tert*-Butylperoxy-2-ethylhexanoat.

Die Peroxide werden dabei in Mengen von 0,2 bis 10 Gew.-%, vorzugsweise von 0,3 bis 3 Gew.-%, bezogen auf die den Reaktionsharzmörtel, eingesetzt.

Bei einer besonders bevorzugten Ausführungsform des erfindungsgemäßen Mehrkomponenten-Mörtelsystems enthält die A Komponente neben dem härtbaren Bestandteil (a) zusätzlich noch eine hydraulisch abbindende oder polykondensierbare anorganische Verbindung, insbesondere Zement, und die B Komponente neben dem Härtungsmittel noch Wasser. Derartige Hybridmörtelsysteme sind ausführlich in der DE 42 31 161 A1 beschrieben. Dabei enthält die A Komponente vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden.

Die A Komponente kann als polykondensierbare anorganische Verbindung auch silikatische, polykondensierbare Verbindungen, insbesondere lösliches, gelöstes und/oder amorphes Siliziumdioxid enthaltende Stoffe umfassen.

Der Vorteil der Erfindung liegt darin, dass durch die Wahl der entsprechenden Itaconsäureester die Aushärteeigenschaften der Harzmischung bzw. des diese enthaltenden Reaktionsharzmörtels beeinflusst werden können. Darüber hinaus konnte gezeigt werden, dass es möglich ist, Teile einer konventionellen petrochemie-basierten Harzmischung und damit eines diese Harzmischung enthaltenden Reaktionsharzmörtels durch biobasierte Komponenten zu ersetzen, ohne dass die Eigenschaften des Reaktionsharzmörtels negativ beeinflusst werden.

Die folgenden Beispiele dienen der weiteren Erläuterung der Erfindung.

### AUSFÜHRUNGSBEISPIELE

### Beispiel 1:

Als Referenzharz wird gemäß der EP 0713015 B1 folgende Harzmischung zubereitet:

60g des Isomerengemisches von Diphenylmethandiisocyanat wird bei 25°C vorgelegt. Nach Zugabe von 0,03 ml Dibutylzinndilaurat werden 7g Dipropylenglykol zugetropft. Unter leichter Begleitheizung steigt die Innentemperatur bei der Zugabe auf 55°C an. Anschließend wird 30min bei 55°C nachgerührt. Danach werden 80g Hydroxypropylmethacrylat (HPMA) zugetropft. Dabei steigt die Innentemperatur unter leichter Begleitheizung auf 95°C an. Der Ansatz wird zwei Stunden bei 95°C nachgerührt bis der Rest-NCO-Gehalt unter 0,2% liegt, bestimmt gemäß DIN EN 1242. Dann werden 80g 1,4-Butandioldimethacrylat als Comonomer zugegeben. Anschließend werden 0,1g Phenothiazin, 1g tert.-Butylbrenzkatechin und 7g Diisopropanol-p-toluidin als Beschleuniger zudosiert.

### Beispiel 2:

Die Harzmischung wird analog Beispiel 1 erzeugt mit dem Unterschied, dass anstatt der 80g 1,4-Butandioldimethacrylat als Comonomer eine Comonomermischung bestehend aus 40g 1,4-Butandioldimethacrylat und 40g 4-(2-(Methacryloyloxy)ethyl)-1-methyl-2-methylensuccinat (Formel I: X = -CH₂-CH₂-, R¹ = CH₃, R² = CH₃) erzeugt wird.

### Beispiel 3:

Die Harzmischung wird analog Beispiel 1 erzeugt mit dem Unterschied, dass anstatt der 80g 1,4-Butandioldimethacrylat als Comonomer eine Comonomermischung bestehend aus 40g 1,4-Butandioldimethacrylat und 40g 1-Dimethyl-O'4,O4-propan-1,3-diyl-bis(2-methylensuccinat) (Formel II: Z = -CH₂-CH₂-CH₂-, R² = CH₃) erzeugt wird.

### Herstellung der Reaktionsharzmörtel

Zur Herstellung der Hybridmörtel werden die Harzmischungen aus den Beispielen 1-3) mit 30-45 Gewichtsanteilen Quarzsand, 15-25 Gewichtsanteilen Zement und 1-5 Gewichtsanteilen pyrogener Kieselsäure im Dissolver zu einer homogenen Mörtelmasse gemischt.

### Härterkomponente

Zur Herstellung der Härterkomponente werden 40 g Dibenzoylperoxid, 250 g Wasser, 25 g pyrogene Kieselsäure, 5 g Schichtsilikat und 700 g Quarzmehl geeigneter Korngrößenverteilung im Dissolver zu einer homogenen Masse gemischt.

Die jeweiligen Reaktionsharzmörtel die Härterkomponente werden im Volumenverhältnis von 5:1 miteinander vermischt und deren Verbundtraglasten gemessen.

### Bestimmung der Versagensverbundspannungen

Zur Bestimmung der Versagensverbundspannung der ausgehärteten Masse verwendet man Ankergewindestangen M12, die in Bohrlöcher in Beton mit einem Durchmesser von 14mm und einer Bohrlochtiefe von 72mm mit den Reaktionsharzmörtel-Zusammensetzungen der Beispiele eingedübelt werden. Hierbei handelte es sich um gut gereinigte hammergebohrte Bohrlöcher, die Aushärtung erfolgte stets bei 20°C. Man ermittelt die mittleren Versagenslasten durch zentrisches Ausziehen der Ankergewindestangen. Es werden jeweils fünf Ankergewindestangen eingedübelt und nach 24h Aushärtung ihre Lastwerte bestimmt. Die hierbei ermittelten Verbundtraglasten σ (N/mm²) sind als Mittelwert in der nachfolgenden Tabelle 1 aufgeführt.

| Tabelle 1 | Beispiel 1 | Beispiel 2 | Beispiel 3 |
|---|---|---|---|
| Verbundtraglasten [N/mm²]: | 24,5±1,3 | 21,6±1,6 | 19,2±0,9 |

Am Markt befindliche Produkte mit sehr hohen Verbundtraglasten, wie z.B. das HIT HY200A der Fa. Hilti erreicht unter vergleichbaren Bedingungen Werte von ca. 30N/mm². Damit zeigt sich, dass die untersuchten Prototypen basierend auf den Beispielen 2-3 ein aussichtsreiches Lastprofil aufweisen.

## Patentansprüche

1. Harzmischung mit einem Vinylesterharz und einer co-polymerisierbaren monomeren Verbindung, die zwei Methacrylat-Gruppen trägt, wobei die co-polymerisierbare Verbindung teilweise durch einen Itaconsäureester der allgemeinen Formel (I) oder (II) 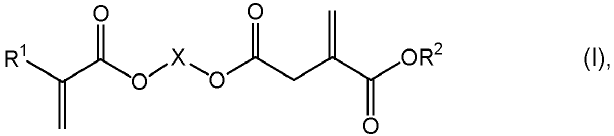 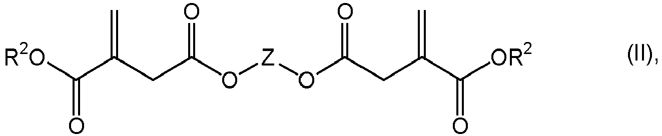 worin R¹ für Wasserstoffatom oder eine Methylgruppe steht, R² für Wasserstoff oder eine C₁-C₆-Alkylgruppe steht, X und Z jeweils unabhängig voneinander für eine C₂-C₁₀-Alkylengruppe stehen, ersetzt wird.

2. Harzmischung nach Anspruch 1, wobei bis zu 100 Gew.-% der co-polymerisierbaren Verbindung durch den Itaconsäureester ersetzt sind.

3. Harzmischung nach Anspruch 1 oder 2, wobei der Itaconsäureester der Formel (I) oder (II) vollständig aus nachwachsenden Rohstoffen erhältlich ist.

4. Harzmischung nach einem der vorhergehenden Ansprüche, wobei die co-polymerisierbare Verbindung, die zwei Methacrylat-Gruppen trägt, ein Zahlenmittel der Molmasse *M̅ₙ* im Bereich von 200 bis 500 g/mol aufweist.

5. Harzmischung nach Anspruch 3, wobei die co-polymerisierbare Verbindung aus der Gruppe, bestehend aus 1,4-Butandioldi(meth)acrylat, Neopentylglykoldi(meth)acrylat, PEG-di(meth)acrylat, Triethylenglykoldi(meth)acrylat und Tripropylenglykoldi(meth)acrylat) ausgewählt ist.

6. Harzmischung nach einem der vorhergehenden Ansprüche, wobei das Vinylesterharz in einer Menge von 20 bis 100 Gew.-% und die co-polymerisierbare Verbindung, einschließlich des Itaconsäureesters, in einer Menge von 0 bis 80 Gew.-% in der Harzmischung enthalten ist.

7. Harzmischung nach einem der vorhergehenden Ansprüche, wobei ferner ein Polymerisationsinhibitor und ein Beschleuniger enthalten ist.

8. Reaktionsharzmörtel umfassend eine Harzmischung nach einem der vorhergehenden Ansprüche und mindestens einen anorganischen Zuschlagstoff.

9. Reaktionsharzmörtel nach Anspruch 8, wobei der mindestens eine anorganische Zuschlagstoff aus der Gruppe bestehend aus Füllstoffen, Verdickungsmitteln, Thixotropiermitteln, nicht reaktiven Lösungsmitteln, Mitteln zur Verbesserung der Fließfähigkeit und/oder Netzmitteln ausgewählt ist.

10. Reaktionsharzmörtel nach Anspruch 9, wobei der mindestens eine anorganische Zuschlagstoff Zement und/oder Quarzsand ist.

11. Reaktionsharzmörtel nach einem der Ansprüche 8 bis 10, wobei die anorganischen Zuschlagstoffe in einer Menge von 30-80% in dem Reaktionsharzmörtel enthalten sind.

12. Mehrkomponenten-Mörtelsystem, enthaltend als A Komponente den Reaktionsharzmörtel nach einem der Ansprüche 8 bis 11 und als B Komponente einen Härter für die radikalisch härtbare Verbindung.

13. Mehrkomponenten-Mörtelsystem nach Anspruch 12, wobei die A Komponente neben dem Reaktionsharzmörtel zusätzlich noch eine hydraulisch abbindende oder polykondensierbare anorganische Verbindung und die B Komponente neben dem Härter zusätzlich noch Wasser enthält.

14. Verwendung des Mehrkomponenten-Mörtelsystems nach Anspruch 12 oder 13 als Bindemittel zur chemischen Befestigung.

## Claims

1. Resin mixture with a vinyl ester resin and a co-polymerisable monomer compound, which carries two methacrylate groups, in which the co-polymerisable compound is replaced partly by an itaconic acid ester of general formula (I) or (II) 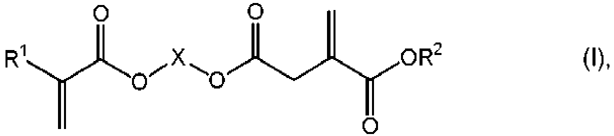 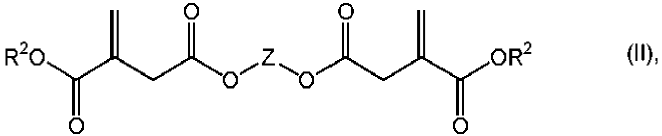 in which R¹ stands for a hydrogen atom or a methyl group, R² for hydrogen or a C-₁-C₆-alkyl group and X and Z each stand for a C₂-C₁₀-alkyl group independently of each other.

2. Resin mixture according to claim 1, in which up to 100% by weight of the co-polymerisable compound is replaced by the itaconic acid ester.

3. Resin mixture according to claim 1 or 2, in which the itaconic acid ester of formula (I) or (II) is obtained completely from renewable raw materials.

4. Resin mixture according to one of the previous claims, in which the co-polymerisable compound, which carries two methacrylate groups, has an average number for the molar mass *Mₙ* in the range of 200 to 500 g/mol.

5. Resin mixture according to claim 3, in which the co-polymerisable compound is selected from the group consisting of 1,4-butandiol di(meth)acrylate, neopentyl glycol di(meth)acrylate, PEG di(meth)acrylate, triethylene glycol di(meth)acrylate and tripropylene glycol di(meth)acrylate).

6. Resin mixture according to one of the previous claims, in which the vinyl ester resin is contained in a quantity of 20 to 100% by weight and the co-polymerisable compound, including the itaconic acid ester, is contained in a quantity of 0 to 80% by weight in the resin mixture.

7. Resin mixture according to one of the previous claims, in which a polymerisation inhibitor and an accelerator are also contained.

8. Reaction resin mortar comprising a resin mixture according to one of the previous claims and at least one inorganic additive.

9. Reaction resin mortar according to claim 8, in which the at least one inorganic additive is selected from the group consisting of fillers, thickening agents, thixotroping agents, non-reactive solvents, agents for improving flowability and/or wetting agents.

10. Reaction resin mortar according to claim 9, in which the at least one inorganic additive is cement and/or quarz sand.

11. Reaction resin mortar according to one of claims 8 to 10, in which the inorganic additives are contained in a quantity of 30-80% in the reaction resin mortar.

12. Multi-component mortar system, containing the reaction resin mortar according to claims 8 to 11 as the A component and a hardener for the radically hardenable compound as the B component.

13. Multi-component mortar system according to claim 12, in which the A component also contains a hydraulically binding or polycondensable inorganic compound as well as the reaction resin mortar and the B component also contains water as well as the hardener.

14. Use of the muti-component mortar system according to claim 12 or 13 as a binding agent for chemical fastening.

## Revendications

1. Mélange de résines comprenant une résine d'ester vinylique et un composé monomère copolymérisable portant deux groupes méthacrylate, le composé copolymérisable étant en partie remplacé par un ester de l'acide itaconique de formule générale (I) ou (II) 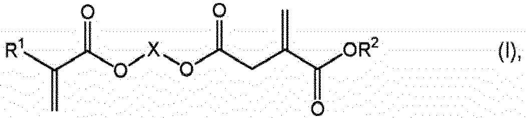 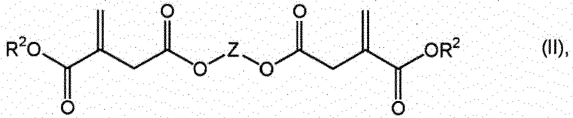 dans lesquelles R¹ représente un atome d'hydrogène ou un groupe méthyle, R² est un atome d'hydrogène ou un groupe alkyle en C₁₋₆, chacun de X et de Z représente indépendamment l'un de l'autre un groupe alkylène en C₂-C₁₀.

2. Mélange de résines selon la revendication 1, dans lequel jusqu'à 100 % en poids du composé copolymérisable sont remplacés par l'ester de l'acide itaconique.

3. Mélange de résines selon la revendication 1 ou 2, dans lequel l'ester de l'acide itaconique de formule (I) ou (II) peut en totalité être obtenu à partir de matières premières renouvelables.

4. Mélange de résines selon l'une des revendications précédentes, dans lequel le composé copolymérisable portant deux groupes méthacrylate présente une masse moléculaire moyenne en nombre *M̅ₙ̅* compris dans la plage de 200 à 500 g/mol.

5. Mélange de résines selon la revendication 3, dans lequel le composé copolymérisable est choisi dans le groupe consistant en le di(méth)acrylate de 1,4-butanediol, le di(méth)acrylate de néopentylglycol, le di(méth)acrylate de PEG, le di(méth)acrylate de triéthylèneglycol et le di(méth)acrylate de tripropylèneglycol.

6. Mélange de résines selon l'une des revendications précédentes, dans lequel la résine d'ester vinylique est présent dans le mélange de résines en une quantité de 20 à 100 % en poids, et le composé copolymérisable, y compris l'ester de l'acide itaconique, est présent dans le mélange de résines en une quantité de 0 à 80 % en poids.

7. Mélange de résines selon l'une des revendications précédentes, qui contient en outre un inhibiteur de polymérisation et un accélérateur.

8. Mortier à base de résine réactive comprenant un mélange de résines selon l'une des revendications précédentes et au moins un granulat inorganique.

9. Mortier à base de résine réactive selon la revendication 8, dans lequel le ou les granulats inorganiques sont choisis dans le groupe consistant en les charges, les épaississants, les agents de thixotropisation, les solvants non-réactifs, les agents pour améliorer la fluidité et/ou les mouillants.

10. Mortier à base de résine réactive selon la revendication 9, dans lequel le ou les granulats sont du ciment et/ou du sable quartzeux.

11. Mortier à base de résine réactive selon l'une des revendications 8 à 10, dans lequel les granulats inorganiques sont présents dans le mortier à base de résine réactive en une quantité de 30 à 80 %.

12. Système de mortier multicomposants, contenant en tant que composant A le mortier à base de résine réactive selon l'une des revendications 8 à 11 et en tant que composant B un durcisseur pour le composé pouvant durcir par durcissement radicalaire.

13. Système de mortier multicomposants selon la revendication 12, dans lequel le composant A contient en outre, en plus du mortier à base de résine réactive, encore un composé inorganique à prise hydraulique ou polycondensable, et le composant B contient en outre encore de l'eau, en plus du durcisseur.

14. Utilisation du système de mortier multicomposants selon la revendication 12 ou 13 en tant que liant pour consolidation chimique.
